# EUROPÄISCHE PATENTSCHRIFT

(11) **EP 3 580 942 B1**
(45) Veröffentlichungstag und Bekanntmachung des Hinweises auf die Patenterteilung: **26.05.2021**
(21) Anmeldenummer: 18700056.7
(22) Anmeldetag: 04.01.2018
(51) Int. Cl.: H04W 4/40, H04W 4/80, H04W 4/02, H04L 29/06, H04L 29/08, B60R 25/24, H04W 84/18, H04L 29/12, H04W 8/00, H04W 12/02, H04W 12/03, H04W 12/12

(54) **VERFAHREN ZUR ERFASSUNG VON SIGNALSTÄRKEN FÜR EINE SIGNALSTÄRKENBASIERTE POSITIONSBESTIMMUNG EINES MOBILEN BLE-GERÄTS**
SIGNAL STRENGTH DETECTION METHOD FOR SIGNAL STRENGTH-BASED POSITION DETERMINATION OF A MOBILE BLE DEVICE
PROCÉDÉ DE DÉTECTION DE L'INTENSITÉ DU SIGNAL POUR LA DÉTERMINATION DE LA POSITION D'UN DISPOSITIF BLE MOBILE SUR LA BASE DE L'INTENSITÉ DU SIGNAL

(30) Priorität: 09.02.2017 DE 102017102620
(43) Veröffentlichungstag der Anmeldung: 18.12.2019
(73) Patentinhaber: Huf Hülsbeck & Fürst GmbH & Co. KG, 42551 Velbert (DE)
(72) Erfinder: GORSKI, Herr David, 47057 Duisburg (DE); REHDER, Herr Benedikt, 42551 Velbert (DE)
(74) Vertreter: Zenz Patentanwälte Partnerschaft mbB
(86) Internationale Anmeldenummer: PCT/EP2018/050201
(87) Internationale Veröffentlichungsnummer: WO 2018/145826

(56) Entgegenhaltungen:
- DE-A1-102014 102 328
- US-A1- 2014 188 309
- US-A1- 2015 028 995
- US-A1- 2015 235 486
- US-B2- 9 008 917

## Beschreibung

Die Erfindung betrifft ein Verfahren zur Erfassung von Signalstärken für eine signalstärkenbasierte Positionsbestimmung eines mobilen BLE-Geräts relativ zu einem Fahrzeug.

Bei Fahrzeugen ist der Einbau von elektronischen Schließsystemen vielfach üblich. Bekannte elektronische Schließsysteme basieren auf einer Verwendung von Funkschlüsseln, welche mit dem Fahrzeug mittels Funkwellen kommunizieren. In diesem Rahmen sind ID-Geber bekannt, die mit einem geeigneten niederfrequenten (LF) Wecksignal aus einem Stromsparmodus in einen Normalbetriebszustand versetzt werden können. Der aufgeweckte ID-Geber und das Fahrzeug können sodann eine bidirektionale Kommunikation durchführen. Im Verlauf dieser Kommunikation können auf dem ID-Geber hinterlegte Identifikationsdaten kraftfahrzeugseitig auf ihre Validität überprüft werden. Zur Verbesserung des Bedienkomforts sowie zum Schutz vor Manipulationen ist gegenwärtig üblich, fahrzeugseitig die Position des ID-Gebers auszuwerten. Hierzu wird insbesondere die vom ID-Geber bereitgestellte LF-Kommunikation genutzt, da in diesem Frequenzbereich mit geringerem Aufwand Positionsbestimmungen möglich sind, als im HF-Frequenzbereich.

Die bekannten LF-/HF-basierten Systeme weisen jedoch den Nachteil auf, dass die entsprechenden ID-Geber von dem Bediener mit sich geführt werden müssen, wenn eine Funktionsauslösung am Fahrzeug bezweckt ist. Weiterhin handelt es sich bei den bekannten ID-Gebern in der Regel um proprietäre Geräte, deren Anpassbarkeit nur mit hohem Aufwand oder gar nicht möglich ist.

Ein Beispiel für ein PEPS-System geht aus der US 9,008,917 B2 hervor. Aus dieser Druckschrift geht insbesondere hervor, dass am Fahrzeug eine Mehrzahl von Sensoren angeordnet sein kann und dass eine Kommunikation zwischen einem Endgerät, beispielsweise einem Smartphone, und einem Zentralmodul eines Fahrzeugs mittels Bluetooth-Low-Energy-Kommunikation, kurz:BLE, durchgeführt werden kann.

Vor diesem Hintergrund liegt der Erfindung die Aufgabe zugrunde, eine Alternative für die bekannten LF-/HF-basierten Systeme bereitzustellen. Diese soll bei guter Genauigkeit und guter Manipulationssicherheit eine Positionsbestimmung eines zur Authentifizierung und/oder Funktionsauslösung an einem Fahrzeug vorgesehenen Geräts erlauben.

Die Aufgabe wird mit einem Verfahren zur Erfassung von Signalstärken für eine signalstärkenbasierte Positionsbestimmung eines mobilen BLE-Geräts relativ zu einem Fahrzeug mit den Merkmalen des Anspruchs 1 gelöst.

Vorteilhafte und zweckmäßige Ausgestaltungen und Weiterbildungen der Erfindung ergeben sich aus den Unteransprüchen.

Das Verfahren zur Positionsbestimmung eines mobilen BLE-Geräts relativ zu einem Fahrzeug sieht vor, dass das BLE-Gerät eine BLE-Schnittstelle sowie das Fahrzeug ein System von BLE-Schnittstellen aufweist.

Das Akronym BLE bezeichnet Bluetooth Low Energy. Bei Bluetooth Low Energy handelt es sich um eine Spezifikation einer Datenübertragung per Funktechnik. Bluetooth Low Energy ist Bestandteil der Bluetooth-Spezifikationen 4.0 und neuer, die öffentlich verfügbar
(https://www.bluetooth.com/specifications/adopted-specifications) und dem Fachmann geläufig sind.

Der Begriff der BLE-Schnittstelle bezieht sich darauf, dass mit der BLE-Schnittstelle sämtliche erforderlichen Hardware-Komponenten und Softwareprodukte vorhanden sind, die für eine Aufnahme und Durchführung einer spezifikationsgemäßen BLE-Kommunikation erforderlich sind. Insbesondere sind auch Steuergerät und Antenne sowie die für deren Betrieb erforderliche Software hiervon umfasst. Ob eine BLE-Schnittstelle als Modul, als Gruppe von Bauteilen oder auch als dezentral angeordnete Komponenten vorliegen ist dabei zweitrangig. Wenn auf die Position einer BLE-Schnittstelle Bezug genommen wird, ist damit die Position der Antenne gemeint.

Das fahrzeugseitige System von BLE-Schnittstellen umfasst eine zentrale Steuerung und wenigstens eine erste BLE-Satelliten-Schnittstelle und eine zweite BLE-Satelliten-Schnittstelle, die mit der zentralen Steuerung gekoppelt sind. Der Begriff der BLE-Satelliten-Schnittstelle bezieht sich nicht notwendigerweise auf einen baulichen Unterschied der BLE-Satelliten-Schnittstelle gegenüber der zentralen Steuerung oder einer sonstigen BLE-Schnittstelle, sondern darauf, dass die BLE-Satelliten-Schnittstellen im Rahmen der Durchführung des Verfahrens auf externe Anweisungen, beispielsweise von der zentralen Steuerung, angewiesen ist. Die zentrale Steuerung kann ebenfalls als BLE-Schnittstelle ausgebildet sein, die dann als BLE-Zentralschnittstelle bezeichnet wird; alternativ kann die zentrale Steuerung lediglich zur Steuerung der BLE-Satelliten-Schnittstellen vorgesehen sein, ohne selbst eine BLE-Schnittstelle zu sein.

Bei dem BLE-Gerät handelt es sich um ein für den Bediener portables Gerät, dass für eine BLE-Kommunikation vorbereitet ist. Beispielsweise kann es sich bei dem BLE-Gerät um ein Smartphone mit BLE-Funktionalität handeln.

Das erfindungsgemäße Verfahren umfasst die folgenden Schritte:
- Fahrzeugseitiges Bereitstellen von Identifikationsdaten;
- verschlüsseltes Übermitteln der Identifikationsdaten an das mobile BLE-Gerät;
- Herleiten von Advertise-Daten aus den Identifikationsdaten in dem mobilen BLE-Gerät und nachfolgendes Senden der aus den Identifikationsdaten hergeleiteten Advertise-Daten von der BLE-Schnittstelle des mobilen BLE-Geräts aus;
- Empfangen der Advertise-Daten durch mehrere der fahrzeugseitigen BLE-Schnittstellen;
- fahrzeugseitiges Auswerten, ob die Advertise-Daten aus den Identifikationsdaten hergeleitet sind;
- Auswerten einer Signalstärke der an der Position der ersten BLE-Satelliten-Schnittstelle empfangenen Advertise-Daten und einer Signalstärke der an der Position der zweiten BLE-Satelliten-Schnittstelle empfangenen Advertise-Daten.

Erfindungsgemäß ist vorgesehen, dass jede gegebene BLE-Schnittstelle der fahrzeugseitigen BLE-Schnittstellen die Advertise-Daten nur bei ihrem ersten Empfang durch die gegebene BLE-Schnittstelle für die Auswertung akzeptiert.

Das Verfahren sieht also vor, dass für eine Positionsermittlung die Signalstärke von Advertise-Daten repräsentierende Daten genutzt werden. Bevorzugt werden zur Positionsermittlung RSSI-Werte genutzt, welche die Signalstärke der Advertise-Daten bei Empfang an den einzelnen Positionen der einzelnen BLE-Satelliten-Schnittstellen repräsentieren. Dadurch, dass einmal vom BLE-Gerät ausgesendete Advertise-Daten für jede der vorhandenen BLE-Schnittstellen nur beim ersten Empfang akzeptiert werden, wird für jede der BLE-Schnittstellen nur maximal ein RSSI-Wert pro Advertise-Vorgang beziehungsweise Advertise-Paket in die Positionsbestimmung des BLE-Geräts einbezogen.

Die Erfindung macht sich unter anderem die spezifikationsgemäß zugelassene Anpassbarkeit der Advertise-Daten zunutze. Die Advertise-Daten werden mittels Identifikationsdaten modifiziert, welche dem BLE-Gerät von einer fahrzeugseitigen Gegenstelle übermittelt wurden. Die angepassten Advertise-Daten können in einem einfachen Fall beispielsweise aus den Identifikationsdaten und den spezifikationsgemäß minimal erforderlichen Headerelementen bestehen. Bei Empfang der Advertise-Daten durch die BLE-Satelliten-Schnittstelle kann diese oder ein verbundenes zentrales Steuergerät von den Advertise-Daten auf die ausgesendeten Identifikationsdaten rückschließen. Dadurch ist eine Rückverfolgbarkeit ermöglicht, die beispielsweise die Bestimmung von Latenzzeiten ermöglicht. Durch diese Rückverfolgbarkeit wird ein Anknüpfungspunkt für die Erkennung von Unstimmigkeiten im Kommunikationsablauf bereitgestellt.

Wenn durch geeignete Wahl der Methode zur Bestimmung der Identifikationsdaten sowie der Methode zum Herleiten der Advertise-Daten sichergestellt ist, dass im Rahmen einer Positionsbestimmung zwei beliebige der gesendeten Advertise-Daten sich stets voneinander unterscheiden, sind die Voraussetzungen geschaffen, dass fahrzeugseitig nachvollziehbar ist, ob Advertise-Daten fahrzeugseitig bereits erfasst wurden oder nicht. Dadurch wird insbesondere erreicht, dass ein Auslesen und Kopieren der gesendeten Advertise-Daten dazu führen würde, dass die kopierten Advertise-Daten aus Sicht der fahrzeugseitigen BLE-Schnittstellen bereits zum zweiten Mal empfangen werden. Erfindungsgemäß ist vorgesehen, dass dieselben Advertise-Daten nicht mehr als ein einziges Mal akzeptiert werden. Es sei angemerkt, dass sich der Ausschluss eines mehrfachen Akzeptierens aus Gründen der Praktikabilität auf eine Positionsbestimmung eines BLE-Geräts bezieht. Wenn eine erneute Positionsbestimmung erfolgt, beispielsweise nach zwischenzeitlichem Entfernen des BLE-Geräts aus dem Erfassungsbereich für eine vorgegebene Mindestzeitdauer, kann ein zwischenzeitliches Löschen des fahrzeugseitigen Gedächtnisses für empfangene Advertise-Daten erfolgen.

Dadurch, dass jede der BLE-Schnittstellen einmal bestimmte Advertise-Daten nur jeweils beim ersten Empfang akzeptiert, kann mit hoher Sicherheit unterstellt werden, dass die empfangenen Daten von der tatsächlichen Position des BLE-Geräts aus gesendet wurden und dass keine Manipulation von einer dritten Stelle vorliegt. Denn ein Kopieren und erneutes Senden derselben Daten würde zu einem zweiten Empfangen der gleichen Daten führen.

Mit dem erfindungsgemäßen Verfahren wird somit auch erreicht, dass die Durchführung von Relay-Station-Attacken oder Man-in-the-Middle-Attacken erschwert wird.

Gemäß einer Weiterbildung des Verfahrens ist vorgesehen, dass das fahrzeugseitige System von BLE-Schnittstellen eine BLE-Schnittstelle aufweist, die als Langreichweiten-BLE-Anordnung weitergebildet ist und/oder Bestandteil einer Langreichweiten-BLE-Anordnung ist. Unter dem Begriff der Langreichweiten-BLE-Anordnung wird eine BLE-Schnittstelle verstanden, die apparativ und/oder in der Art ihrer Ansteuerung derart angepasst und/oder erweitert ist, dass sie für ein Senden und/oder Empfangen über eine im Vergleich zu den übrigen BLE-Schnittstellen größere Distanz eingerichtet ist.

Beispielsweise kann eine Sende- und/oder Empfangsdistanz der Langreichweiten-BLE-Anordnung gegenüber einer Sende- und/oder Empfangsdistanz einer handelsüblichen BLE-Schnittstelle, insbesondere gegenüber jeder der anderen BLE-Schnittstellen der bei Umsetzung der Erfindung verwendeten BLE-Schnittstellen, um wenigstens 50 Prozent erhöht sein zur Bereitstellung einer der BLE-Schnittstellen als Langreichweiten-BLE-Schnittstelle. Die Erhöhung der Sende- und/oder Empfangsdistanz kann beispielsweise durch Anpassung der Antennendimensionierung oder durch Erhöhung der Ansteuerungsleistung herbeigeführt sein.

Weiterhin ist vorgesehen, dass die zentrale Steuerung als BLE-Zentralschnittstelle ausgebildet ist und sich in einem energiereduzierten Modus (bevorzugt einem spezifikationsgemäßen "sleep mode") befindet, aus dem sie mittels eines Wecksignals (bevorzugt eines spezifikationsgemäßen "Wakeup Signals") in den aktiven Zustand versetzt wird. Das Wecksignal wird von der Langreichweiten-BLE-Anordnung ausgegeben, nachdem die Langreichweiten-BLE-Anordnung ein Advertise-Signal eines genäherten BLE-Geräts erfasst.

Bevorzugt handelt es sich bei der Langreichweiten-BLE-Anordnung um eine BLE-Long-Range-Schnittstelle.

Bei der BLE-Long-Range-Schnittstelle handelt es sich um eine hard- und softwaremäßige Umsetzung der mit Version 5.0 der Bluetooth-Spezifikation eingeführten BLE-Long-Range-Funktionalität.

Mit der zusätzlichen Bereitstellung einer Langreichweiten-BLE-Anordnung, bevorzugt einer BLE-Long-Range-Schnittstelle, wird erreicht, dass der Großteil der Bauteile des vorhandenen Systems sich die meiste Zeit über in einem energiesparenden Zustand befindet und erst bei Annähern eines mobilen BLE-Geräts die Arbeitsbereitschaft der BLE-Schnittstellen herbeigeführt wird. Dadurch, dass mit der Langreichweiten-BLE-Anordnung ein vergleichsweiser großer Radius abgedeckt wird, ist zudem die rechtzeitige Sicherstellung der Arbeitsbereitschaft des Gesamtsystems gewährleistet.

In einer Ausprägung kann vorgesehen sein, dass die Langreichweiten-BLE-Anordnung ein Wecksignal ausgibt, genau dann, wenn das Advertise-Signal des genäherten BLE-Geräts auf eine der Langreichweiten-BLE-Anordnung vorbekannte Gerätekennung des BLE-Geräts hinweist. Alternativ oder zusätzlich kann die Erfüllung der Bedingung gefordert sein, dass das Advertise-Signal mit einem RSSI-Wert oberhalb eines vorgegebenen Schwellwerts erfasst wird. Durch diese Maßnahmen können flexibel die Bedingungen eingestellt werden, unter denen die Wachschaltung der BLE-Zentralschnittstelle erfolgt. Auch zusätzliche Voraussetzungen können zur Ausgabe eines Wecksignals erforderlich sein.

Gemäß einer weiteren vorteilhaften Verfahrensführung kann vorgesehen sein, dass die BLE-Zentralschnittstelle im aktiven Zustand einen Scan zum Auffinden eines BLE-Geräts ausführt, welches als vertrauenswürdiges BLE-Gerät anzusehen ist. Dies kann beispielsweise dadurch bewerkstelligt sein, dass fahrzeugseitig ein Filtern nach den spezifikationsgemäß vorgesehenen UUIDs erfolgt. Aber auch ein Filtern nach anderen Parametern kann vorgesehen sein.

Gemäß einer weiteren Ausgestaltung des Verfahrens kann vorgesehen sein, dass die zentrale Steuerung ein Aushandeln eines gemeinsamen Schlüssels mit dem BLE-Gerät mittels Challenge Response veranlasst. Dies bezweckt, dass eine Verbindung zwischen dem BLE-Gerät und der BLE-Zentralschnittstelle möglich ist, die ein verschlüsseltes Kommunizieren erlaubt. Dabei ist vorgesehen, dass der Schlüssel sowohl von dem BLE-Gerät als auch von der BLE-Zentralschnittstelle hinterlegt wird und bis zum Beenden der Verbindung als Session Key genutzt wird. Ob der Schlüssel auf einem Speicherelement der BLE-Zentralschnittstelle oder auf einem weiteren, mit dieser gekoppelten, Speicherelement hinterlegt wird, ist dabei zweitrangig.

Gemäß einer weiteren Ausführung des Verfahrens kann beispielsweise vorgesehen sein, dass die erste BLE-Satelliten-Schnittstelle und die zweite BLE-Satelliten-Schnittstelle sich in einem Sleep-Modus versetzt befinden und von einem Wecksignal aufgeweckt werden. Das Wecksignal wird von der BLE-Zentralschnittstelle ausgegeben, nachdem eine Kommunikation zwischen der BLE-Zentralschnittstelle und dem BLE-Gerät einen vorgegebenen Status eingenommen hat. Es ist also vorgesehen, dass die erste und die zweite BLE-Satelliten-Schnittstellen sowie alle anderen Satelliten-Schnittstellen, sofern noch weitere vorhanden sind, bei Erfüllung der Bedingung aufgeweckt werden, dass zwischen der BLE-Zentralschnittstelle und dem BLE-Gerät ein bestimmter Status der Kommunikation erreicht ist. Beispielsweise kann vorgesehen sein, dass mit Etablieren einer Session zur verschlüsselten Verbindung die hinreichende Voraussetzung erfüllt ist, dass das Wecksignal für die erste und zweite BLE-Satelliten-Schnittstellen, bevorzugt für alle BLE-Satelliten-Schnittstellen, ausgegeben wird. Die beschriebene Maßnahme bewirkt eine weitere Reduktion der Energieaufnahme.

Hinsichtlich der Identifikationsdaten kann vorgesehen sein, dass diese fahrzeugseitig mittels eines Zufallsgenerators ermittelt werden. Dieser Zufallsgenerator kann Bestandteil einer der BLE-Schnittstellen, beispielsweise der BLE-Zentralschnittstelle oder der BLE-Long-Range-Schnittstelle sein. Der Zufallsgenerator kann aber auch Bestandteil eines weiteren Steuergeräts sein. Die Verwendung eines Zufallsgenerators erhöht die Sicherheit des vorgesehenen Verfahrens zusätzlich.

Eine weitere Ausprägung des Verfahrens kann dahingehend ausgestaltet sein, dass eine Liste von mehreren Identifikationsdaten fahrzeugseitig mittels eines Zufallsgenerators ermittelt wird. Dadurch kann ein Vorrat an Identifikationsdaten generiert werden, der in einem Zuge als Gesamtheit dem mobilen BLE-Gerät übermittelt werden kann. Der Vorrat der Identifikationsdaten ist hiernach sowohl dem BLE-Gerät als auch kraftfahrzeugseitig bekannt. Die Liste von mehreren Identifikationsdaten kann dadurch in vorgegebener oder zufälliger Reihenfolge abgearbeitet werden. Dadurch wird erreicht, dass nach dem gewissermaßen erfolgten Verbrauch von Identifikationsdaten in einmal gesendeten Advertise-Daten ein weiteres Senden von nachfolgenden Advertise-Daten keine zwischenzeitliche Kommunikation von den kraftfahrzeugseitigen BLE-Schnittstellen zu dem mobilem BLE-Gerät mehr erforderlich ist. Aus diesem Umstand ergibt sich eine weitere Reduzierung der Energieaufnahme. Außerdem wird ein geringerer Zeitbedarf für die Durchführung des Verfahrens erreicht.

Gemäß einer Weiterbildung des Verfahrens geben die Identifikationsdaten einen Advertise-Channel vor, der von dem BLE-Gerät zu verwenden ist. Dadurch wird die Sicherheit des Verfahrens weiter erhöht.

Gemäß einer anderen Weiterbildung des Verfahrens wird dem BLE-Gerät eine sogenannte Seed-Kennung übermittelt, die danach sowohl dem BLE-Gerät als auch fahrzeugseitig bekannt ist. Mittels der Seed-Kennung kann hiernach im BLE-Gerät und kraftfahrzeugseitig unabhängig voneinander eine Erstellung von Identifikationsdaten vorgenommen werden. Der Vergleich der erhaltenen Ergebnisse stellt dabei sicher, dass auf BLE-Gerät und Fahrzeug entsprechend zueinander passende Transformationsanweisungen hinterlegt sind, mit denen ein beiden Geräten bekannter Seed-Wert zu jeweils von dem anderen Gerät erwarteten Ergebnissen führt. Beispielsweise kann vorgesehen sein, dass sowohl im BLE-Gerät als auch fahrzeugseitig eine Hash-Funktion auf den Seed-Wert angewendet wird. Selbstverständlich setzt dieser Verfahrensschritt die vorherige Hinterlegung der entsprechenden Informationen sowohl fahrzeugseitig als auch auf dem BLE-Gerät voraus.

Gemäß einer weiteren Ausführung des Verfahrens kann vorgesehen sein, dass die Übermittlung der Identifikationsdaten im Connection Mode erfolgt, der zwischen der BLE-Zentralschnittstelle und dem BLE-Gerät etabliert ist und die übermittelten Identifikationsdaten mit einem Session-Key verschlüsselt werden, der bei dem Etablieren der Verbindung zwischen der BLE-Zentralschnittstelle und dem BLE-Gerät ausgehandelt wurde. Durch diese Maßnahme wird erreicht, dass die Identifikationsdaten nicht von einer dritten Stelle zur nachfolgenden Kompromittierung des Systems ausgelesen werden können.

In einer weiteren vorteilhaften Ausprägung des Verfahrens erfolgt das Auswerten, ob die Advertise-Daten aus den Identifikationsdaten hergeleitet sind, fahrzeugseitig und zentral. Hierfür kann beispielsweise eine der BLE-Schnittstellen (BLE-Zentralschnittstelle, BLE-Longrange-Schnittstelle und/oder BLE-Satelliten-Schnittstelle) genutzt werden. Alternativ oder zusätzlich kann die Verwendung eines weiteren Steuergeräts vorgesehen sein.

Weiterhin kann vorgesehen sein, dass die fahrzeugseitig bereitgestellten Identifikationsdaten an die erste BLE-Satelliten-Schnittstelle übermittelt werden. Die Übermittlung wird dabei geschützt, indem sie über eine LIN-Bus-Verbindung erfolgt, welcher die BLE-Zentralschnittstelle mit wenigstens der ersten BLE-Satelliten-Schnittstelle und der zweiten BLE-Satelliten-Schnittstelle verbindet. Durch die Nutzung von LIN-Bus-Verbindungen wird eine sichere, schnelle und kostengünstige Einbindung aller BLE-Satelliten-Schnittstellen in das Gesamtsystem gewährleistet

Insbesondere kann vorgesehen sein, dass eine Anzahl von wenigstens drei BLE-Satelliten-Schnittstellen vorgesehen ist, bevorzugt wenigstens fünf BLE-Satelliten-Schnittstellen, wobei die BLE-Satelliten-Schnittstellen im Sternkonzept mit der BLE-Zentralschnittstelle verbunden sind. Insbesondere kann vorgesehen sein, dass jeder der für die erste BLE-Satelliten-Schnittstelle und die zweite BLE-Satelliten-Schnittstelle beschriebenen Verfahrensschritte für alle der vorhandenen BLE-Satelliten-Schnittstellen des fahrzeugseitigen Systems von BLE-Schnittstellen durchgeführt wird.

Insbesondere kann vorgesehen sein, dass die BLE-Schnittstelle des mobilen BLE-Geräts wiederholt Advertise-Daten sendet, wobei nachfolgend gesendete Advertise-Daten aus unterschiedlichen Identifikationsdaten hergeleitet werden. Dabei kann vorgesehen sein, dass nach dem Senden von Advertise-Daten eine Übermittlung von neuen Identifikationsdaten zu dem BLE-Gerät erfolgt. Es kann aber auch vorgesehen sein, dass neue Identifikationsdaten aus der oben erwähnten Liste von mehreren Identifikationsdaten ausgewählt werden. Weiterhin kann beispielsweise vorgesehen sein, dass eine Neugenerierung von Identifikationsdaten zur Herleitung von Advertise-Daten unter Verwendung der oben erwähnten Seed-Informationen erfolgt.

Es kann vorgesehen sein, dass die erste BLE-Satelliten-Schnittstelle RSSI-Werte aus nachfolgend erhaltenen Advertise-Daten erfasst und die zweite BLE-Satelliten-Schnittstelle RSSI-Werte aus nachfolgend erhaltenen Advertise-Daten erfasst zur Verbesserung der Zeit- und/oder Ortsauflösung der erfassten RSSI-Werte. So kann beispielsweise vorgesehen sein, dass eine Folge von RSSI-Werten aus nachfolgend erhaltenen Advertise-Daten gemittelt, geglättet oder sonst wie mathematisch behandelt wird, wobei die Bildung eines gleitenden Mittelwerts bevorzugt ist. Dadurch kann, je nach verwendeter mathematischer Operation erreicht werden, dass Messfehler im Sinne von Ausreißern in ihrem Einfluss reduziert werden können. Dadurch wird die Datenbasis für die bezweckte Positionsbestimmung insgesamt verbessert.

Insbesondere kann vorgesehen sein, dass für jede der BLE-Satelliten-Schnittstellen des Fahrzeugs die nachfolgend erhaltenen Advertise-Daten erfasst werden, damit für jede BLE-Satelliten-Schnittstelle und für jeden Satz von hergeleiteten Advertise-Daten ein RSSI-Wert vorliegt. Einmal gesendete Advertise-Daten führen somit für jede BLE-Satelliten-Schnittstelle zu einem RSSI-Wert. Zusammen mit der Erfassung nachfolgend ausgesendeter Advertise-Daten ergibt sich für jede BLE-Satelliten-Schnittstelle eine Folge von RSSI-Werten. Mit diesen kann für jede BLE-Satelliten-Schnittstelle ein gemittelter RSSI-Wert bestimmt werden. Aus der Gesamtheit der gemittelten RSSI-Werte kann sodann mit hoher Genauigkeit, bevorzugt mittels Trilateration, die Position des BLE-Geräts relativ zu dem Fahrzeug bestimmt werden.

Da das Vorhandensein einer BLE-Zentralschnittstelle vorgesehen ist, bietet es sich an, dass jedes der oben genannten Verfahren oder Ausprägungen der Verfahren zusätzlich unter Nutzung der von der BLE-Zentralschnittstelle empfangenen Advertise-Daten und der hieraus ermittelten RSSI-Werten bestimmt wird.

Weitere Einzelheiten, Merkmale und Vorteile des erfindungsgemäßen Verfahrens ergeben sich aus der nachfolgenden Beschreibung im Zusammenhang mit den Figuren, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

Es zeigen
Fig. 1: eine schematische Darstellung der Rahmenbedingungen zur Ausführung des erfindungsgemäßen Verfahrens;
Fig. 2: eine erste beispielhafte Ausführungsform des erfindungsgemäßen Verfahrens;
Fig. 3: eine zweite beispielhafte Ausführungsform des erfindungsgemäßen Verfahrens;
Fig. 4: eine dritte beispielhafte Ausführungsform des erfindungsgemäßen Verfahrens.

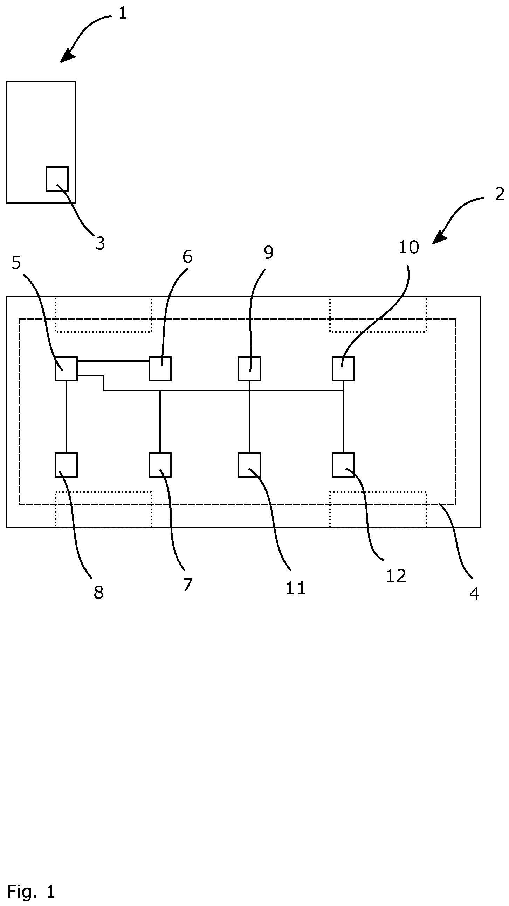

Fig. 1 ist eine beispielhafte Konstellation zu entnehmen, in der das erfindungsgemäße Verfahren ausgeführt werden kann. Fig. 1 ist zum einen ein als Smartphone ausgebildetes BLE-Gerät 1 zu entnehmen, das eine BLE-Schnittstelle 3 aufweist. Ferner ist Fig. 1 eine schematische Darstellung eines Fahrzeugs 2 zu entnehmen. Das Fahrzeug 2 weist ein System 4 von BLE-Schnittstellen auf. Das System 4 von BLE-Schnittstellen umfasst eine zentrale Steuerung 5 sowie eine erste BLE-Satelliten-Schnittstelle 6 und eine zweite Satelliten-Schnittstelle 7. In der dargestellten Ausführungsform weist das Fahrzeug ferner noch weitere BLE-Satelliten-Schnittstellen 9, 10, 11 und 12 auf. Die Anzahl und Positionierung der vorgesehenen BLE-Satelliten-Schnittstellen sind im Rahmen der Erfindung unter anderem dahingehend auszuwählen, welche Exaktheit der
   Positionsbestimmung erreicht werden soll und welche Investitionen für das System selbst in Kauf genommen werden. Die BLE-Satelliten-Schnittstellen 6, 7, 9, 10, 11 und 12 sind mit der zentralen Steuerung gekoppelt. Die Kopplung ist in der dargestellten Ausführungsform mittels kabelgebundenen LIN-Bus-Verbindungen ausgeführt. Ferner umfasst das System 4 von BLE-Schnittstellen eine BLE-Long-Range-Schnittstelle 8, die ebenfalls mit der zentralen Steuerung 5 gekoppelt ist. Das in Fig. 1 dargestellte Ausführungsbeispiel sieht vor, dass sämtliche BLE-Schnittstellen des Systems 4 in Sternkonzept mit der zentralen Steuerung 5 verbunden sind.

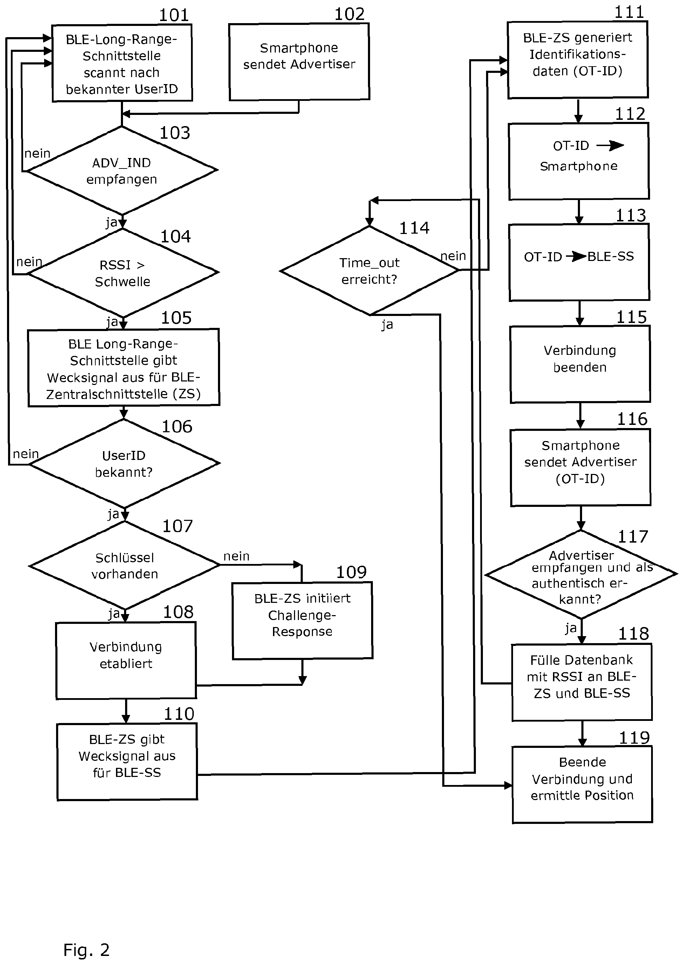

Ein Ausführungsbeispiel für ein erfindungsgemäßes Verfahren ist mit dem Flussdiagramm der Fig. 2 wiedergegeben. Das Verfahren sieht vor, dass in einem ersten Schritt das als Smartphone ausgebildete BLE-Gerät einen Advertiser im Sinne der Bluetooth-Spezifikation aussendet (Schritt 102). Parallel dazu scannt die BLE-Long-Range-Schnittstelle nach User IDs, welche der BLE-Long-Range-Schnittstelle zuvor bekannt gemacht worden sind (Schritt 101). Sobald die Advertise-Daten empfangen wurden (Schritt 103), wird als zusätzliche Bedingung abgeprüft, ob die Intensität der empfangenen Daten auf die Anwesenheit des Smartphones innerhalb einer vorgegebenen begrenzten Umgebung um das Fahrzeug schließen lassen (Schritt 104). Wenn oder sobald die Intensität unterhalb des vorgegebenen Schwellwerts liegt, erfolgt der Abbruch des Verfahrens und die ursprüngliche Konstellation wird mit den Schritten 101 und 102 wieder eingenommen.

Wenn der vorgegebene Schwellwert des RSSI überschritten ist, wird die gewünschte Einsatzbereitschaft des Gesamtsystems angenommen. Um die Einsatzbereitschaft herzustellen, wird von der BLE-Long-Range-Schnittstelle ein Wecksignal ausgegeben, mit dem die im Sleep-Modus befindliche BLE-Zentralschnittstelle in ihren aktiven Zustand versetzt wird (Schritt 105). Die Ausgabe des Wecksignals erfolgt also unter der hinreichenden Bedingungskombination, dass die BLE-Long-Range-Schnittstelle ein Advertise-Signal eines genäherten BLE-Geräts erfasst hat, die Gerätekennung des BLE-Geräts als vorbekannt und berechtigt identifiziert hat und die Überschreitung eines Schwellwerts für den RSSI-Wert mit den empfangenen Advertise-Daten erkannt hat. Da nun eine mögliche Kommunikation mit dem Smartphone erwartet werden kann, wird ein Scanintervall der geweckten BLE-Zentralschnittstelle auf einen geringen Wert zwischen 0,5 und 2,0 s gesetzt.

Sofern eine bekannte und berechtigte UserID erkannt wurde (Schritt 106) und bereits ein Session Key vorliegt (Schritt 107), wird in Antwort auf ein nächstes erhaltenes Advertise-Signal des Smartphones eine Verbindung zwischen der BLE-Zentralschnittstelle und dem Smartphone aufgenommen und etabliert (Schritt 108). Dies kann beispielsweise dadurch ausgelöst werden, dass das Smartphone zunächst weitere Advertise-Daten aussendet, welche mit einer Connection-Request-Anfrage erwidert wird. In der Reaktion wird entweder eine Connection Confirmation seitens des Smartphones ausgesendet oder, in dem Fall dass noch kein Session Key vorliegt, von der BLE-Zentralschnittstelle ein Aushandeln eines Session Keys mit dem Smartphone veranlasst (Schritt 109). Für den Fall also, dass kein Session Key hinterlegt ist, wird von der BLE-Zentralschnittstelle ein Challenge-Response-Authentication-Verfahren initiiert mit dem Ziel, das Pairing erfolgreich in eine etablierte Verbindung zu überführen. Dadurch, dass eine etablierte Verbindung vorliegt (von Schritt 108 an), ist eine verschlüsselte Verbindung zwischen der BLE-Zentralschnittstelle und dem Smartphone möglich.

Bereits in diesem Stadium kann zwischen Schritt 108 und Schritt 110 ein weiterer, nicht dargestellter, Schritt vorgesehen sein, welcher umfasst, dass seitens der BLE-Zentralschnittstelle die etablierte Verbindung wieder getrennt wird. Danach liegt wieder ein Zustand vor, in dessen Rahmen keine verschlüsselte Verbindung zwischen Smartphone und BLE-Zentralschnittstelle mehr unmittelbar möglich ist. Jedoch ist beiden Geräten die Identität des anderen Geräts bekannt und es sind mit dem bereits erfolgten Pairing die Voraussetzungen geschaffen, eine verschlüsselte Verbindung zwischen Smartphone und BLE-Zentralschnittstelle ohne ein erneutes Pairing wieder herzustellen.

In diesem Stadium erfolgt eine Ausgabe eines Wecksignals durch die BLE-Zentralschnittstelle, mit welchem die mit der BLE-Zentralschnittstelle gekoppelten BLE-Satelliten-Schnittstellen aufgeweckt werden (Schritt 110). Das Wecken wird durch erfüllen der in dieser Ausgestaltung hinreichenden Bedingung ausgelöst, dass die BLE-Zentralschnittstelle registriert hat, dass ein in der Nähe befindliches Smartphone zur Kopplung mit ihr bereit ist.

Ausgehend von diesem Stadium generiert die BLE-Zentralschnittstelle Identifikationsdaten OT-ID (Schritt 111). Die Identifikationsdaten werden von der BLE-Zentralschnittstelle mit einem vorgegebenen Verfahren generiert, wobei im Einzelnen das vorgegebene Verfahren nicht wesentlich für die Funktionalität des Verfahrens ist. In der dargestellten Ausführungsform ist vorgesehen, dass eine Annahme oder ein Verwerfen von Advertise-Daten durch die BLE-Satelliten-Schnittstellen selbst vorgenommen wird. Um dies zu ermöglichen, werden die Identifikationsdaten allen einzelnen BLE-Satelliten-Schnittstellen übermittelt (Schritt 113), wozu beispielsweise die kabelgebundene LIN-Bus-Verbindung der Anordnung gemäß Fig. 1 verwendet werden kann.

Nachdem nach einem weiteren Advertise-Signal des Smartphones, einem nachfolgenden Connection Request durch die BLE-Zentralschnittstelle und einer in Reaktion erfolgenden Connection Confirmation durch das Smartphone erneut die Verbindung zwischen BLE-Zentralschnittstelle und Smartphone etabliert ist, erfolgt ein verschlüsseltes Übermitteln der Identifikationsdaten an das Smartphone (Schritt 112). Kurz nach Ablegen der Identifikationsdaten auf einem internen Speicher des Smartphones veranlasst das Smartphone einen Verbindungsabbruch (Schritt 115). Da die etablierte Verbindung nun beendet ist, ist eine Kommunikation zwischen BLE-Gerät und BLE-Schnittstellen des Systems des Fahrzeugs bis auf weiteres nur im Advertise-Modus möglich. In dieser Konstellation leitet das Smartphone Advertise-Daten aus den Identifikationsdaten her. Dies kann in einem einfachen Fall dadurch erfolgen, dass die Identifikationsdaten mit den spezifikationsgemäß erforderlichen Headern versehen werden. Die Advertise-Daten werden von der BLE-Schnittstelle des Smartphones ausgesendet (Schritt 116). Die Advertise-Daten werden hiernach durch mehrere der fahrzeugseitigen BLE-Schnittstellen, bevorzugt von allen BLE-Satelliten-Schnittstellen, empfangen (Schritt 117). Es kann auch vorgesehen sein, dass die als BLE-Zentralschnittstelle ausgebildete zentrale Steuerung und die BLE-Long-Range-Schnittstelle bei dem Empfang und dem Auswirken mitarbeiten. Die fahrzeugseitigen BLE-Schnittstellen empfangen die Advertise-Daten und werten aus, ob die Advertise-Daten aus den Identifikationsdaten hergeleitet sind (Schritt 117). Dies erfolgt beispielsweise in dem gegebenen Fall, indem geprüft wird, ob die den BLE-Satelliten-Schnittstellen bereits bekannten Identifikationsdaten in den Advertise-Daten vorhanden sind. Alternativ kann vorgesehen sein, dass ein den BLE-Satelliten-Schnittstellen bekannter funktionaler Zusammenhang zwischen den ursprünglichen Identifikationsdaten und den erfassten Advertise-Daten besteht, vorzugsweise in injektiver Funktion. Alternativ kann auch vorgesehen sein, dass das Auswerten, ob die Advertise-Daten aus den Identifikationsdaten hergeleitet sind, an zentraler Stelle im Fahrzeug erfolgt, beispielsweise durch die zentrale Steuerung, die BLE-Zentralschnittstelle oder eine andere zentrale Einheit. Die durch die BLE-Satelliten-Schnittstellen erfassten Signalstärken der empfangenen Advertise-Daten an der jeweiligen Position der BLE-Satelliten-Schnittstellen werden nun in einer Datenbank gesammelt. Die Datenbank weist damit Daten auf, die für jede Position der BLE-Satelliten-Schnittstellen und für jedes ausgesendete Advertise-Daten-Paket höchstens einen RSSI-Wert umfassen. Die Datenbasis wird verbessert, indem das Verfahren sooft wiederholt wird, wie es durch den Implementierer des Verfahrens gewünscht ist (Pfeil zwischen Schritt 118 und Schritt 111). Die Schritte ausgehend von Schritt 111 werden somit wiederholt.

Wesentliches Merkmal des erfindungsgemäßen Verfahrens ist, das für jede gegebene BLE-Schnittstelle der fahrzeugseitigen BLE-Schnittstellen die Advertise-Daten nur bei ihrem ersten Empfang durch die gegebene BLE-Schnittstelle für die Auswertung akzeptiert werden. Daraus ergibt sich, dass einmal ausgesendete Advertise-Daten, die einmal generierte Identifikationsdaten oder aus diesen hergeleitete Informationen umfassen, von jeder der BLE-Satelliten-Schnittstellen nur einmal zur Auswertung akzeptiert werden. Ob dieses Akzeptieren durch die BLE-Satelliten-Schnittstellen selbst erfolgt oder ob erst zu einem späteren Zeitpunkt, beispielsweise durch die zentrale Steuerung, eine Filterung vorgenommen wird, ist zweitrangig. Da die empfangenen Advertiser daraufhin geprüft werden, ob sie zum ersten Mal bei jeder der vorhandenen BLE-Satelliten-Schnittstellen ankommen, ist bei Implementierung des Verfahrens zweckmäßig, dass das Bereitstellen der Identifikationsdaten sowie das Herleiten von Advertise-Daten jeweils mit derartigen Algorithmen vorgenommen wird, dass das Hintereinanderausführen von dem Bereitstellen der Identifikationsdaten und von dem Herleiten der Advertise-Daten ebenfalls injektiv ist. Wenn dies nicht der Fall ist, ist das Verfahren immer noch durchführbar, führt jedoch zu False Negatives.

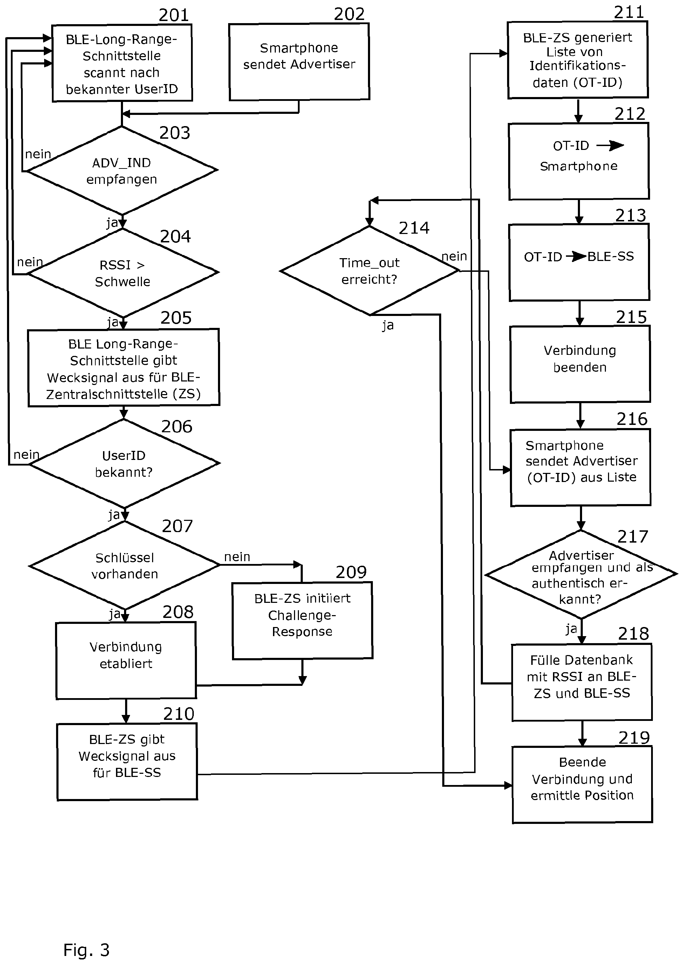

Fig. 3 ist eine Ausgestaltung des Verfahrens zu entnehmen, welches sich in den Schritten 211 bis 216 von dem in Fig. 2 dargestellten Verfahren unterscheidet. Im Unterschied zu dem in Fig. 2 dargestellten Verfahren generiert die BLE-Zentralschnittstelle nicht einmal Identifikationsdaten, die sodann zum Advertisen dem Smartphone bereitgestellt werden, wonach derselbe Vorgang wiederholt wird, bis die Abbruchbedingung erreicht wird (Schritt 114). Stattdessen generiert die BLE-Zentralschnittstelle eine Liste von Identifikationsdaten (Schritt 211), die sodann als Ganzes sowohl dem Smartphone (Schritt 212) als auch den BLE-Satelliten-Schnittstellen übermittelt wird (Schritt 213). Dadurch, dass eine gesamte Liste von Identifikationsdaten dem Smartphone und den BLE-Satelliten-Schnittstellen übermittelt ist, ist das Wiederholen der Schritte 211 bis 215 nicht erforderlich. Stattdessen ist lediglich das Wiederholen des Schritts 216 erforderlich, was so lange erfolgt, bis eine geeignete Abbruchbedingung erfüllt ist (Schritt 214). Die Abbruchbedingung kann beispielsweise davon abhängig sein, dass ein RSSI einen vorgegebenen Schwellwert unterschreitet.

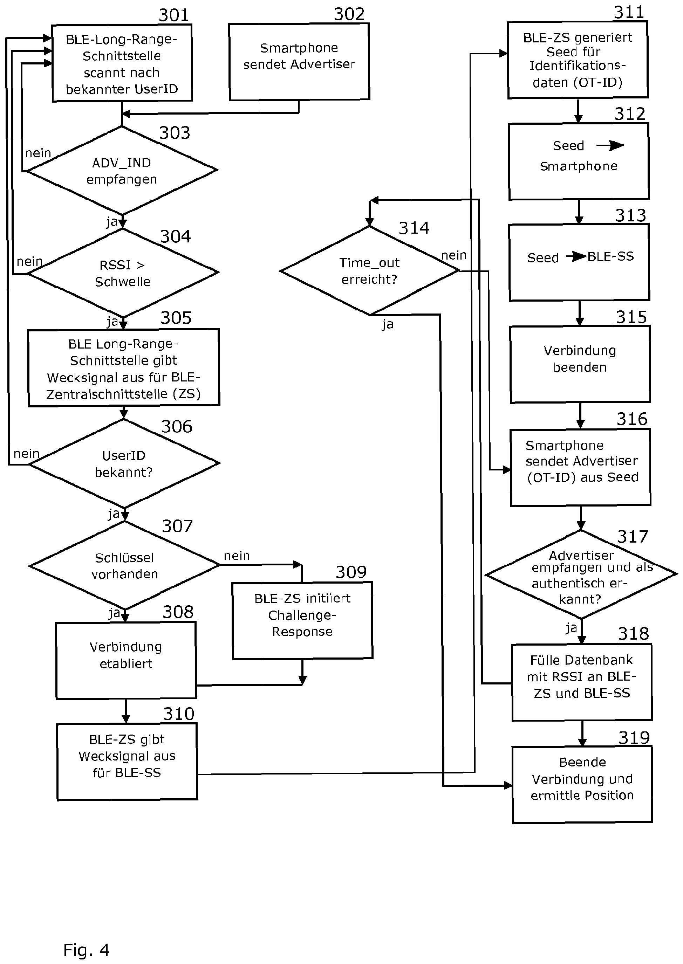

Ein weiteres Ausführungsbeispiel für das erfindungsgemäße Verfahren ist Fig. 4 zu entnehmen. Die in Fig. 4 dargestellte beispielhafte Ausführung des Verfahrens unterscheidet sich in den Schritten 311, 312, 313, 316 und 317 von den Schritten 211, 212, und 213, wie sie in Fig. 3 dargestellt sind. Im Unterschied zu dem in Fig. 2 dargestellten Verfahren, wird nicht eine Liste an Identifikationsdaten generiert, welche sodann geschlossen an Smartphone und BLE-Satelliten-Schnittstellen übermittelt wird; stattdessen wird eine einmal generierte Seed-Kennung (Schritt 311) übermittelt, die dem BLE-Gerät (Schritt 312) sowie den BLE-Satelliten-Schnittstellen (Schritt 313) übermittelt wird. Auf dem BLE-Gerät (Schritt 316) wie auch bei den einzelnen BLE-Satelliten-Schnittstellen (Schritt 317) wird aus dem Seed-Wert mittels einer sowohl dem BLE-Gerät als auch den BLE-Satelliten-Schnittstellen bekannten Hashfunktion eine Liste von Identifikationsdaten ermittelt. Die Nutzung dieser Liste erfolgt dann in ähnlicher Weise wie die Nutzung der in dem Ausführungsbeispiel der Fig. 3 erwähnten Liste, wobei die Reihenfolge aus Berechnung der Advertise-Daten und Senden der Advertise-Daten beispielsweise hinsichtlich Laufzeitoptimierung und ähnlichem ausgewählt werden kann.

## Patentansprüche

1. Verfahren zur Erfassung von Signalstärken für eine signalstärkenbasierte Positionsbestimmung eines mobilen BLE-Geräts (1) relativ zu einem Fahrzeug (2),
wobei das mobile BLE-Gerät (1) eine BLE-Schnittstelle (3) aufweist,
wobei das Fahrzeug (2) ein System (4) von BLE-Schnittstellen (6, 7, 8, 9, 10, 11, 12) aufweist, das eine zentrale Steuerung (5) und wenigstens eine erste BLE-Satelliten-Schnittstelle (6) und eine zweite BLE-Satelliten-Schnittstelle (7) umfasst, die mit der zentralen Steuerung (5) gekoppelt sind, wobei der Begriff der BLE-Satelliten-Schnittstelle (6, 7) sich darauf bezieht, dass die BLE-Satelliten-Schnittstellen (6, 7) im Rahmen der Durchführung des Verfahrens auf externe Anweisungen, beispielsweise von der zentralen Steuerung (5), angewiesene BLE-Schnittstellen (6, 7, 8, 9, 10, 11, 12) sind, und
wobei das Verfahren die folgenden Schritte umfasst:
- Fahrzeugseitiges Bereitstellen von Identifikationsdaten,
- verschlüsseltes Übermitteln der Identifikationsdaten an das mobile BLE-Gerät (1),
- Herleiten von Advertise-Daten aus den
Identifikationsdaten in dem mobilen BLE-Gerät (1) und nachfolgendes Senden der aus den Identifikationsdaten hergeleiteten Advertise-Daten von der BLE-Schnittstelle (3) des mobilen BLE-Geräts (1) aus,
- Empfangen der Advertise-Daten durch mehrere der fahrzeugseitigen BLE-Schnittstellen (6, 7, 8, 9, 10, 11, 12),
- fahrzeugseitiges Auswerten, ob die Advertise-Daten aus den Identifikationsdaten hergeleitet sind,
- Auswerten einer Signalstärke der an der Position der ersten BLE-Satelliten-Schnittstelle (6) empfangenen Advertise-Daten und einer Signalstärke der an der Position der zweiten BLE-Satelliten-Schnittstelle (7) empfangenen Advertise-Daten; wobei für jede gegebene BLE-Schnittstelle (6, 7, 8, 9, 10, 11, 12) der fahrzeugseitigen BLE-Schnittstellen (6, 7, 8, 9, 10, 11, 12) die Advertise-Daten nur bei ihrem ersten Empfang durch die gegebene BLE-Schnittstelle (6, 7, 8, 9, 10, 11, 12) für die Auswertung akzeptiert werden.

2. Verfahren nach Anspruch 1, wobei das fahrzeugseitige System (4) von BLE-Schnittstellen eine BLE-Schnittstelle (8), bevorzugt eine der BLE-Satelliten-Schnittstellen (6, 7, 8, 9, 10, 11, 12), aufweist, die derart als Langreichweiten-BLE-Anordnung angepasst ist, dass die als Langreichweiten-BLE-Anordnung angepasste BLE-Schnittstelle für ein Senden und/oder Empfangen von Daten eingerichtet ist über eine im Vergleich zu den übrigen BLE-Schnittstellen größere Distanz,
wobei die zentrale Steuerung (5) als BLE-Zentralschnittstelle (5) ausgebildet ist und in einem Energiesparmodus versetzt ist und von einem Wecksignal aufgeweckt wird zum Versetzen der BLE-Zentralschnittstelle (5) in ihren aktiven Zustand, wobei das Wecksignal von der Langreichweiten-BLE-Anordnung (8) ausgegeben wird, nachdem die Langreichweiten-BLE-Anordnung (8) ein Advertise-Signal eines genäherten BLE-Geräts erfasst.

3. Verfahren nach Anspruch 2, **dadurch gekennzeichnet, dass** die Langreichweiten-BLE-Anordnung (8) ein Wecksignal zum Wecken der BLE-Zentralschnittstelle (5) in Abhängigkeit davon ausgibt,
dass das Advertise-Signal des genäherten BLE-Geräts (1) auf eine der Langreichweiten-BLE-Anordnung (8) vorbekannte Gerätekennung des mobilen BLE-Geräts (1) hinweist, und/oder
dass das Advertise-Signal mit einem RSSI-Wert oberhalb eines vorgegebenen Schwellwerts erfasst wird.

4. Verfahren nach Anspruch 2 oder nach Anspruch 3, **dadurch gekennzeichnet, dass** die Langreichweiten-BLE-Anordnung (8) eine BLE-Long-Range-Schnittstelle aufweist oder eine BLE-Long-Range-Schnittstelle ist.

5. Verfahren nach einem der vorhergehenden Ansprüche, wobei die als BLE-Zentralschnittstelle (5) ausgebildete zentrale Steuerung (5) im aktiven Zustand einen Scan zum Auffinden eines BLE-Geräts (1) ausführt, welches als für die BLE-Zentralschnittstelle (5) vertrauenswürdiges BLE-Gerät (1) hinterlegt ist.

6. Verfahren nach einem der vorhergehenden Ansprüche, wobei die zentrale Steuerung (5) ein Aushandeln eines gemeinsamen Schlüssels mit dem mobilen BLE-Gerät (1) mittels Challenge-Response veranlasst zum Herstellen einer Verbindung, der sowohl von dem mobilen BLE-Gerät (1) als auch von der zentralen Steuerung (5) hinterlegt wird und bis zum Beenden der Verbindung als Session-Key genutzt wird.

7. Verfahren nach einem der vorhergehenden Ansprüche, wobei die erste BLE-Satelliten-Schnittstelle (6) und die zweite BLE-Satelliten-Schnittstelle (7) sich in einem Sleep-Modus versetzt befinden und von einem Wecksignal aufgeweckt werden, das von der als BLE-Zentralschnittstelle (5) ausgebildeten zentralen Steuerung (5) ausgegeben wird, nachdem eine Kommunikation zwischen der BLE-Zentralschnittstelle (5) und dem mobilen BLE-Gerät (1) einen vorgegebenen Status eingenommen hat.

8. Verfahren nach einem der vorhergehenden Ansprüche, wobei die Identifikationsdaten fahrzeugseitig mittels eines Zufallsgenerators ermittelt werden.

9. Verfahren nach einem der vorhergehenden Ansprüche, wobei eine Liste von mehreren Identifikationsdaten fahrzeugseitig mittels eines Zufallsgenerators ermittelt wird.

10. Verfahren nach einem der vorhergehenden Ansprüche, wobei die Identifikationsdaten einen Advertise-Channel vorgeben, der von dem BLE-Gerät (1) zu verwenden ist.

11. Verfahren nach einem der vorhergehenden Ansprüche, wobei dem BLE-Gerät (1) eine Seed-Kennung übermittelt wird, die danach sowohl dem BLE-Gerät (1) als auch fahrzeugseitig bekannt ist, wobei miteinander in Relation stehende Identifikationsdaten im BLE-Gerät (1) und fahrzeugseitig unabhängig voneinander mittels dem BLE-Gerät (1) und dem Fahrzeug (2) bekannter Funktionen ermittelt werden.

12. Verfahren nach einem der vorhergehenden Ansprüche, wobei die Übermittlung der Identifikationsdaten im Connection Mode erfolgt, der zwischen der BLE-Zentralschnittstelle (5) und dem BLE-Gerät (1) etabliert ist und die übermittelten Identifikationsdaten mit einem Session-Key verschlüsselt werden, der bei dem Etablieren der Verbindung zwischen der BLE-Zentralschnittstelle (5) und dem BLE-Gerät (1) ausgehandelt wurde.

13. Verfahren nach einem der vorhergehenden Ansprüche, wobei das Auswerten, ob die Advertise-Daten aus Identifikationsdaten hergeleitet sind, fahrzeugseitig und zentral erfolgt.

14. Verfahren nach einem der vorhergehenden Ansprüche, wobei die fahrzeugseitig bereitgestellten Identifikationsdaten an die erste BLE-Satelliten-Schnittstelle (6) und an die zweite BLE-Satelliten-Schnittstelle (7) übermittelt werden, wobei die Übermittlung zum Schutz der Übermittlung vor unberechtigtem Auslesen über einen LIN-Bus erfolgt, der die zentrale Steuerung mit der ersten BLE-Satelliten-Schnittstelle (6) und mit der zweiten BLE-Satelliten-Schnittstelle (7) verbindet.

15. Verfahren nach einem der vorhergehenden Ansprüche, wobei die BLE-Schnittstelle (3) des mobilen BLE-Geräts (1) wiederholt Advertise-Daten sendet, wobei nachfolgend gesendete Advertise-Daten aus unterschiedlichen Identifikationsdaten hergeleitet werden.

16. Verfahren nach Anspruch 15, wobei das Auswerten des durch die erste BLE-Satelliten-Schnittstelle (6) erfassten RSSI-Werts und des durch die zweite BLE-Satelliten-Schnittstelle (7) erfassten RSSI-Werts aus nachfolgend erhaltenen Advertise-Daten wiederholt wird zur Verbesserung der Zeit- und/oder Ortsauflösung der erfassten RSSI-Werte.

17. Verfahren nach Anspruch 15 oder nach Anspruch 16, wobei für jede BLE-Satelliten-Schnittstelle (6, 7, 8, 9, 10, 11, 12) des Fahrzeugs die nachfolgend erhaltenen Advertise-Daten erfasst werden, sodass für jede BLE-Satelliten-Schnittstelle (6, 7, 8, 9, 10, 11, 12) und jeden Satz von hergeleiteten Advertise-Daten ein RSSI-Wert vorliegt, wobei mit den vorliegenden RSSI-Werten für jede BLE-Satelliten-Schnittstelle (6, 7, 8, 9, 10, 11, 12) ein gemittelter RSSI-Wert bestimmt wird zur Bestimmung der Position des mobilen BLE-Geräts (1) relativ zu dem Fahrzeug (2) mittels Trilateration.

## Claims

1. Signal strength acquisition method for signal strength based position determination of a BLE mobile device (1) relative to a vehicle (2),
wherein the BLE mobile device (1) comprises a BLE interface (3),
wherein the vehicle (2) comprises a system (4) of BLE interfaces (6, 7, 8, 9, 10, 11, 12) comprising a central controller (5) and at least a first satellite BLE interface (6) and a second satellite BLE interface (7) coupled to the central controller (5), wherein the term satellite BLE interface (6, 7) refers to the satellite BLE interfaces (6, 7) being BLE interfaces (6, 7, 8, 9, 10, 11, 12) instructed by external instructions, for example by the central controller (5), in the context of carrying out the method, and
the method comprising the steps of:
- Providing identification data on the vehicle side,
- Transmitting encrypted identification data to the mobile BLE device (1),
- Deriving advertise data from the identification data in the BLE mobile device (1) and subsequently transmitting the advertise data derived from the identification data from the BLE interface (3) of the BLE mobile device (1),
- Receiving said advertise data through several of the vehicle side BLE interfaces (6, 7, 8, 9, 10, 11, 12),
- Evaluating vehicle side whether the advertise data is derived from the identification data,
- Evaluating a signal strength of the advertise data received at the position of the first satellite BLE interface (6) and a signal strength of the advertise data received at the position of the second satellite BLE interface (7);
wherein, for any given BLE interface (6, 7, 8, 9, 10, 11, 12) of the vehicle side BLE interfaces (6, 7, 8, 9, 10, 11, 12), the advertise data is accepted for evaluation only upon its first reception by the given BLE interface (6, 7, 8, 9, 10, 11, 12).

2. Method according to claim 1, wherein the vehicle side system (4) of BLE interfaces comprises a BLE interface (8), preferably one of the satellite BLE interfaces (6, 7, 8, 9, 10, 11, 12), adapted as a long-range BLE device such that the BLE interface adapted as a long-range BLE device is set up for transmitting and/or receiving data over a greater distance compared to the other BLE interfaces,
wherein the central controller (5) is formed as a central BLE interface (5) and is set in a power saving mode and is awakened by a wake up signal for setting the central BLE interface (5) in its active state, the wake up signal being output from the long-range BLE device (8) after the long-range BLE device (8) detects an advertise signal of an approached BLE device.

3. Method according to claim 2, **characterized**
**in that** the long-range BLE device (8) outputs an alarm signal for waking the central BLE interface (5) in dependence thereon,
**in that** the advertise signal of the approached BLE device (1) indicates a device identifier of the mobile BLE device (1) that is known to the long-range BLE device (8), and/or
**in that** the advertise signal is detected with an RSSI value above a predefined threshold.

4. Method according to claim 2 or according to claim 3,
**characterized in that** the long-range BLE device (8) comprises a long-range BLE interface or is a long-range BLE interface.

5. Method according to any one of the preceding claims,
wherein the central controller (5) is configured as a central BLE interface (5) and executes a scan in the active state to locate a BLE device (1) that is stored as a BLE device (1) being trusted by the central BLE interface (5).

6. Method according to any one of the preceding claims,
wherein the central controller (5) initiates negotiating a common key with the BLE mobile device (1) by means of challenge-response to establish a connection, which common key is stored by both the BLE mobile device (1) and the central controller (5) and is used as a session key until the connection is terminated.

7. Method according to any one of the preceding claims,
wherein the first satellite BLE interface (6) and the second satellite BLE interface (7) are in a sleep mode and are woken up by a wake-up signal which is output from the central controller (5) formed as a central BLE interface (5) after a communication between the central BLE interface (5) and the BLE mobile device (1) has achieved a predetermined state.

8. Method according to any one of the preceding claims,
wherein the identification data are determined on the vehicle side by means of a random generator.

9. Method according to any one of the preceding claims,
wherein a list of a plurality of identification data is determined on the vehicle side by means of a random generator.

10. Method according to any one of the preceding claims,
wherein the identification data specifies an advertise channel to be used by the BLE device (1).

11. Method according to any one of the preceding claims,
wherein a seed identifier is transmitted to the BLE device (1), which seed identifier is subsequently known both to the BLE device (1) and on the vehicle side, wherein identification data related to one another in the BLE device (1) and on the vehicle side are determined independently of one another by means of functions known to the BLE device (1) and to the vehicle (2).

12. Method according to any one of the preceding claims,
wherein the transmission of the identification data is performed in connection mode established between the central BLE interface (5) and the BLE device (1) and the transmitted identification data is encrypted with a session key negotiated when establishing the connection between the central BLE interface (5) and the BLE device (1).

13. Method according to any of the preceding claims,
wherein the evaluation of whether the advertise data is derived from identification data is performed centrally on the vehicle side.

14. Method according to any one of the preceding claims,
wherein the identification data provided on the vehicle side is transmitted to the first satellite BLE interface (6) and to the second satellite BLE interface (7), wherein the transmission takes place via a LIN bus that connects the central controller to the first satellite BLE interface (6) and to the second satellite BLE interface (7) in order to protect the transmission from unauthorized reading.

15. Method according to any one of the preceding claims,
wherein the BLE interface (3) of the BLE mobile device (1) repeatedly transmits advertise data, wherein subsequently transmitted advertise data is derived from different identification data.

16. Method according to claim 15, wherein evaluating the RSSI value captured by the first satellite BLE interface (6) and the RSSI value captured by the second satellite BLE interface (7) from subsequently obtained advertise data is repeated for improving the time and/or location resolution of the captured RSSI values.

17. Method according to claim 15 or to claim 16, wherein for each satellite BLE interface (6, 7, 8, 9, 10, 11, 12) of the vehicle, the advertise data obtained is acquired such that for each satellite BLE interface (6, 7, 8, 9, 10, 11, 12) and each set of derived advertise data an RSSI value is available, wherein an averaged RSSI value is determined with the available RSSI values (6, 7, 8, 9, 10, 11, 12) for determining the position of the BLE mobile device (1) relative to the vehicle (2) by trilateration.

## Revendications

1. Procédé de capture de l'intensité du signal pour la détermination de la position basée sur l'intensité du signal d'un dispositif mobile BLE (1) par rapport à un véhicule (2),
dans lequel le dispositif mobile BLE (1) comprend une interface BLE (3),
dans lequel le véhicule (2) a un système (4) d'interfaces BLE (6, 7, 8, 9, 10, 11, 12) comprenant un contrôleur central (5) et au moins une première interface satellite BLE (6) et une seconde interface satellite BLE (7) couplées au contrôleur central (5), dans lequel le terme interface satellite BLE (6, 7) fait référence aux interfaces satellites BLE (6, 7) qui sont des interfaces BLE (6, 7, 8, 9, 10, 11, 12) commandées par des instructions externes, par exemple par le contrôleur central (5), au cours de l'exécution du procédé, et dans lequel les interfaces satellites BLE (6, 7, 8, 9, 10, 11, 12) sont des interfaces BLE (6, 7, 8, 9, 10, 11, 12) couplées au contrôleur central (5),
le procédé comprenant les étapes suivantes :
- Fourniture de données d'identification du côté du véhicule,
- Transmettre des données d'identification cryptées au dispositif mobile BLE (1),
- Dériver de données d'annonce à partir des données d'identification dans le dispositif mobile BLE (1) et transmettre ultérieurement des données d'annonce dérivées des données d'identification à partir de l'interface BLE (3) du dispositif mobile BLE (1),
- Recevoir des données d'annonce par le biais de plusieurs des interfaces BLE embarquées (6, 7, 8, 9, 10, 11, 12),
- Évaluation embarquée permettant de vérifier si les données de publicité sont dérivées des données d'identification,
- Evaluer une intensité de signal des données d'annonce reçues à la position de la première interface satellite BLE (6) et une intensité de signal des données d'annonce reçues à la position de la seconde interface satellite BLE (7) ;
dans lequel, pour chacune interface BLE donnée (6, 7, 8, 9, 10, 11, 12) des interfaces BLE embarquées (6, 7, 8, 9, 10, 11, 12), les données d'annonce sont acceptées pour évaluation uniquement lors de leur première réception par l'interface BLE donnée (6, 7, 8, 9, 10, 11, 12).

2. Procédé selon la revendication 1, dans lequel le système embarqué (4) d'interfaces BLE comprend une interface BLE (8), de préférence l'une des interfaces satellites BLE (6, 7, 8, 9, 10, 11, 12), qui est adaptée en tant qu'agencement BLE longue portée de sorte que l'interface BLE adaptée en tant qu'agencement BLE longue portée est configurée pour transmettre et/ou recevoir des données sur une plus grande distance par rapport aux autres interfaces BLE,
dans lequel le contrôleur central (5) est formé comme une interface centrale BLE (5) et est placé dans un mode d'économie d'énergie et est réveillé par un signal de réveil pour placer l'interface centrale BLE (5) dans son état actif, le signal de réveil étant émis par le dispositif BLE à longue portée (8) après que le dispositif BLE à longue portée (8) ait détecté un signal d'annonce d'un dispositif BLE approché.

3. Procédé selon la revendication 2, **caractérisé en ce que** le dispositif BLE à longue portée (8) émet un signal d'alarme pour réveiller l'interface centrale BLE (5) en fonction de celui-ci,
**en ce que** le signal d'annonce du dispositif BLE approché (1) est indicatif d'un identifiant de dispositif du dispositif BLE mobile (1) qui est pré-connu du dispositif BLE à longue portée (8), et/ou
que le signal d'annonce est détecté avec une valeur RSSI supérieure à un seuil prédéterminé.

4. Procédé selon la revendication 2 ou selon la revendication 3, **caractérisé en ce que** le dispositif BLE longue portée (8) comprend une interface BLE longue portée ou est une interface BLE longue portée.

5. Procédé selon l'une quelconque des revendications précédentes, dans lequel le contrôleur central (5) configuré comme une interface centrale BLE (5) exécute un balayage dans l'état actif pour localiser un dispositif BLE (1) qui est stocké comme un dispositif BLE (1) auquel l'interface centrale BLE (5) fait confiance.

6. Procédé selon l'une quelconque des revendications précédentes, dans lequel le contrôleur central (5) provoque la négociation d'une clé commune avec le dispositif mobile BLE (1) au moyen d'une réponse de défi pour établir une connexion, laquelle clé est déposée à la fois par le dispositif mobile BLE (1) et le contrôleur central (5) et est utilisée comme clé de session jusqu'à ce que la connexion soit terminée.

7. Procédé selon l'une quelconque des revendications précédentes, dans lequel la première interface satellite BLE (6) et la deuxième interface satellite BLE (7) sont dans un décalage du mode veille et sont réveillées par un signal de réveil émis par le contrôleur central (5) configuré comme une interface centrale BLE (5) après qu'une communication entre l'interface centrale BLE (5) et le dispositif mobile BLE (1) a pris un état prédéterminé.

8. Procédé selon l'une quelconque des revendications précédentes, dans lequel les données d'identification sont déterminées du côté du véhicule au moyen d'un générateur aléatoire.

9. Procédé selon l'une quelconque des revendications précédentes, dans lequel une liste d'une pluralité de données d'identification est déterminée du côté du véhicule au moyen d'un générateur de nombres aléatoires.

10. Procédé selon l'une quelconque des revendications précédentes, dans lequel les données d'identification spécifient un canal d'annonce à utiliser par le dispositif BLE (1) .

11. Procédé selon l'une quelconque des revendications précédentes, dans lequel un identifiant d'amorçage est transmis au dispositif BLE (1), lequel identifiant d'amorçage est ensuite connu à la fois du dispositif BLE (1) et du côté du véhicule, dans lequel des données d'identification interdépendantes dans le dispositif BLE (1) et du côté du véhicule sont déterminées indépendamment les unes des autres au moyen de fonctions connues du dispositif BLE (1) et du véhicule (2).

12. Procédé selon l'une quelconque des revendications précédentes, dans lequel la transmission des données d'identification est effectuée en mode connexion établi entre l'interface centrale BLE (5) et le dispositif BLE (1) et les données d'identification transmises sont cryptées avec une clé de session négociée lors de l'établissement de la connexion entre l'interface centrale BLE (5) et le dispositif BLE (1).

13. Procédé selon l'une quelconque des revendications précédentes, dans lequel l'évaluation du fait que les données d'annonce sont issues de données d'identification est réalisée côté véhicule et de manière centralisée.

14. Procédé selon l'une quelconque des revendications précédentes, dans lequel les données d'identification fournies côté véhicule sont transmises à la première interface satellite BLE (6) et à la deuxième interface satellite BLE (7), la transmission étant effectuée via un bus LIN reliant le contrôleur central à la première interface satellite BLE (6) et à la deuxième interface satellite BLE (7) pour protéger la transmission contre une lecture non autorisée.

15. Procédé selon l'une quelconque des revendications précédentes, dans lequel l'interface BLE (3) du dispositif mobile BLE (1) transmet de manière répétée des données d'annonce, les données d'annonce transmises ultérieurement étant dérivées de différentes données d'identification.

16. Procédé selon la revendication 15, dans lequel l'évaluation de la valeur RSSI détectée par la première interface satellite BLE (6) et de la valeur RSSI détectée par la deuxième interface satellite BLE (7) à partir de données d'annonce obtenues ultérieurement est répétée pour améliorer la résolution temporelle et/ou de localisation des valeurs RSSI détectées.

17. Procédé selon la revendication 15 ou selon la revendication 16, dans lequel pour chaque interface satellite BLE (6, 7, 8, 9, 10, 11, 12) du véhicule, les données d'annonce obtenues ci-dessous sont acquises, de sorte que pour chaque interface satellite BLE (6, 7, 8, 9, 10, 11, 12) et chaque ensemble de données d'annonce dérivées, dans lequel une valeur RSSI moyenne est déterminée avec les valeurs RSSI disponibles pour chaque interface satellite BLE (6, 7, 8, 9, 10, 11, 12) pour déterminer la position du dispositif mobile BLE (1) par rapport au véhicule (2) par trilatération.
